# EUROPÄISCHE PATENTSCHRIFT

(11) **EP 0 764 089 B1**
(45) Veröffentlichungstag und Bekanntmachung des Hinweises auf die Patenterteilung: **02.09.1998**
(21) Anmeldenummer: 95920761.4
(22) Anmeldetag: 06.06.1995
(51) Int. Cl.: B60K 41/04, B60K 41/14

(54) **STEUERUNG FÜR EIN KRAFTFAHRZEUG**
CONTROL UNIT FOR A MOTOR VEHICLE
DISPOSITIF DE COMMANDE POUR UN VEHICULE

(30) Priorität: 10.06.1994 DE 4420433
(43) Veröffentlichungstag der Anmeldung: 26.03.1997
(73) Patentinhaber: SIEMENS AKTIENGESELLSCHAFT, 80333 München (DE)
(72) Erfinder: GRAF, Friedrich, D-93059 Regensburg (DE); SCHÄFER, Joachim, D-94369 Rain (DE); STORJOHANN, Kai, D-93053 Regensburg Grass (DE); ULM, Michael, D-93087 Alteglofsheim (DE)
(86) Internationale Anmeldenummer: DE9500737
(87) Internationale Veröffentlichungsnummer: WO9534437

(56) Entgegenhaltungen:
- EP-A- 0 425 199
- EP-A- 0 529 117
- WO-A-95/05951
- US-A- 4 945 481

## Beschreibung

Die Erfindung betrifft eine Steuerung nach dem Oberbegriff von Anspruch 1. Solche Steuerungen in einem Kraftfahrzeug mit automatischem Getriebe schließen eine Motorsteuerung und eine Getriebesteuerung ein. Es gibt sie in unterschiedlichen Ausführungen.

Bei einer bekannten integrierten Steuerung für das automatische Getriebe und den Motor eines Kraftfahrzeugs wird das Getriebe durch ein eigenständiges, von der Motorsteuerung getrenntes Steuergerät gesteuert (US-A 4 945 481).

Bei einem Stufengetriebe hat eine Getriebesteuerung im wesentlichen folgende Funktionen auszuführen:
- eine Schaltübergangssteuerung, die für ein weiches und verschleißfreies Einlegen der einzelnen Gänge sorgt;
- eine Steuerung der Wandlerüberbrückungskupplung;
- eine Schaltlogik, die den jeweils einzulegenden Gang festlegt;
- eine Eigendiagnose, und
- Basisfunktionen, wie z.B. Ein- und Ausgabefunktionen.

Im Falle eines stufenlosen Getriebes hat eine Getriebesteuerung folgende Funktionen auszuführen:
- Regelung einer Soll-Übersetzung
- Steuern einer Anfahrkupplung und einer Wandlerüberbrückung
- Berechnung der Soll-Übersetzung
- Durchführen einer Eigendiagnose und
- Steuern von Basisfunktionen

Um nachfolgend für Stufengetriebe und für stufenlose Getriebe gleiche Begriffe verwenden zu können, werden
- die Schaltübergangssteuerung eines Stufengetriebes und die Regelung der Soll-Übersetzung bei einem stufenlosem Getriebe einheitlich als Übergangssteuerung sowie
- die Schaltlogik eines Stufengetriebes und die Berechnung der Soll-Übersetzung bei einem stufenlosem Getriebe einheitlich als Übersetzungsselektion
   bezeichnet.

Da die Übergangssteuerung getriebespezifisch ausgelegt werden muß, die Auslegung der Übersetzungsselektion aber unter anderem von Daten des Motors und des Chassis des Kraftfahrzeugs abhängt, ergibt sich eine große Anzahl unterschiedlicher Varianten der Steuerung für die verschiedenen Kraftfahrzeugtypen. Außerdem ist der Aufwand für den Kabelbaum zwischen der Getriebesteuerung und den verschiedenen Ventilen und Sensoren im Getriebe recht hoch.

Der Erfindung liegt die Aufgabe zugrunde, die Anzahl der erforderlichen Varianten der Steuerung zu verringern. Diese Aufgabe wird erfindungsgemäß durch die Steuerung nach Anspruch 1 gelöst. Zweckmäßige Weiterbildungen der Erfindung sind in den Unteransprüchen niedergelegt.

Die Vorteile der Erfindung liegen insbesondere darin, daß der Aufwand für die Verkabelung und die Kommunikation im Kraftfahrzeug deutlich verringert wird. Die chassis- und motorspezifischen Funktionen der Getriebesteuerung sind in die Motorsteuerung, während die rein getriebespezifischen Funktionen in einer rechnergesteuerten Übersetzungsselektion enthalten sind. Diese stellt einen "intelligenten" Aktor dar, der bei dem Hersteller des Getriebes vollständig getestet wird. Dies ergibt einen nicht unerheblichen Logistikvorteil.

Die Erfindung wird im folgenden anhand der Zeichnung erläutert. Es zeigen:
- Figur 1: die wesentlichen Bestandteile eines Kraftfahrzeugantriebs, der mit einer erfindungsgemäßen Steuerung versehen ist, und
- Figur 2: die Steuerung des Antriebs nach Figur 1, als Blockdiagramm dargestellt.

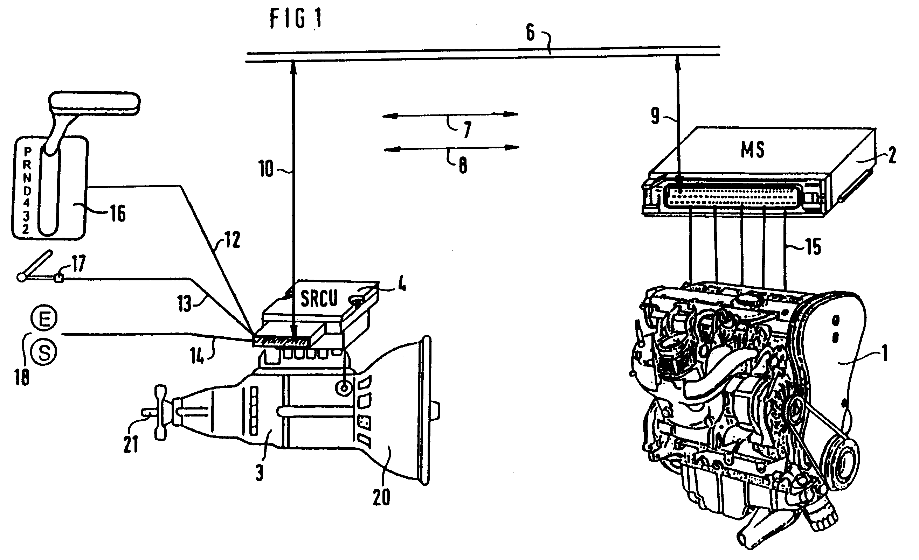

Ein Motor 1 wird von einer Motorsteuerung 2 und ein Getriebe 3 von einer Übersetzungsselektion 4 gesteuert (Figur 1). Die Motorsteuerung 2 und die Übersetzungsselektion 4 sind durch einen Kommunikationskanal 6 verbunden, der z.B. als CAN-Bus realisiert ist. Dieser Bus ist hier nur schematisch dargestellt, er ist allgemein bekannt und in vielen Veröffentlichungen beschrieben.

Zwischen der Motorsteuerung 2 und der Übersetzungsselektion 4 werden zum einen Daten ausgetauscht, die zur Übersetzungswahl dienen und durch einen Pfeil 7 angedeutet sind, und zum anderem Konfigurationsparameter, die der Anpassung an das jeweilige Kraftfahrzeug dienen und die durch einen Pfeil 8 angedeutet sind. Beispiele der über den Kommunikationskanal 6 übertragenen Daten werden weiter hinten aufgeführt.

Der bidirektionale Anschluß der Motorsteuerung 2 an den Kommunikationskanal 6 ist durch eine Leitung 9 schematisch angedeutet, der ebenfalls bidirektionale Anschluß der Übersetzungsselektion 4 an den Kommunikationskanal 6 durch eine Leitung 10.

Durch Signalleitungen 12, 13 und 14 sind ein Wählhebel 16, ein Kickdown-Schalter 17 und ein Fahrprogramm-Wählschalter 18 an die Übersetzungsselektion 4 angeschlossen. Über diese Bedienungselemente gibt der Fahrer in bekannter Weise seine Befehle oder Wünsche über den Wählhebel 16 in die Übersetzungsselektion 4 ein: die gewünschte Fahrstufe P, R, N, D, 4, 3 oder 2 bei einem Stufengetriebe bzw. P, R, N oder D bei einem stufenlosen Getriebe, die Anforderung einer starken Beschleunigung über den Kickdown-Schalter 17 und die Auswahl zwischen einem "Economy"- und einem "Sport"-Fahrprogramm über den Fahrprogramm-Auswahlschalter 18.

Der Motor 1 ist durch Steuer- und Signalleitungen 15 mit der Motorsteuerung 2 verbunden. Über diese Signalleitungen werden Sensorsignale über die Motordrehzahl, die Motortemperatur und andere bekannte Betriebsparameter von dem Motor 1 an die Motorsteuerung 2 übertragen, und von dieser werden Befehle zum Steuern der Zündung, der Kraftstoff-Einspritzmenge, des Zündzeitpunktes und gfs. anderer bekannter Motorparameter an den Motor 1 übermittelt.

Der Motor 1 und das Getriebe 3 sind hier der besseren Übersichtlichkeit wegen getrennt dargestellt, es ist aber allgemein bekannt, daß die Abtriebswelle des Motors 1 direkt an ein Anfahrelement 20, zum Beispiel einen Drehmomentwandler, des Getriebes 3 angeschlossen ist. Entsprechend ist auch die Ausgangswelle 21 an den Abtriebsstrang des Kraftfahrzeugs angeschlossen. Das Chassis, die Radaufhängungen, die Räder und weitere Bestandteile des Kraftfahrzeugs sind hier nicht dargestellt, da sie von der Erfindung nicht betroffen und allgemein bekannt sind.

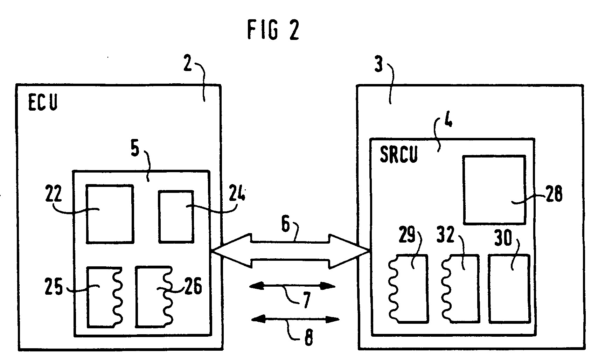

In die Motorsteuerung 2 (Figur 2) sind - unter dem Bezugszeichen 5 zusammengefaßt - einige der Funktionseinheiten einer Getriebesteuerung, die chassis- oder motorspezifisch sind, d.h. von Daten des Motors und des Chassis des Kraftfahrzeugs abhängen, in die Motorsteuerung integriert: eine Übersetzungsselektion 22, eine Fahrer- oder Fahrverhalten-Klassifikation 24, eine Diagnoseschaltung 25 und Basismodule 26, die z.B. Daten Ein- und -Ausgabeprozeduren durchführen. Die Übersetzungsselektion 22 kann als Fuzzy-Steuerung ausgebildet sein und in diesem Fall auch die Funktionen Fahrer- oder Fahrverhalten-Klassifikation, Fahrstreckenbewertung und dynamische Schaltpunktkorrektur enthalten (vgl. unsere ältere Patentanmeldung EP 93106831.6; uns. Aktenzeichen 93P1237E).

Die rechnergesteuerte Übersetzungsselektion 4 - auch als SRCU (Smart Ratio Change Unit) bezeichnet - enthält im wesentlichen nur Funktionseinheiten, die von Daten des Getriebes abhängig sind. Es sind dies eine Übersetzungswechselsteuerung 28, eine Diagnoseschaltung 29 für die Aktoren, eine Steuerung 30 des Anfahrelementes 20 und Basismodule 32, die z.B. die Signale von bekannten getriebenahen Sensoren verarbeiten, z.B. von Drehzahlsensoren im Getriebe, von Temperatur- und von Hydraulikdruck-Sensoren im Getriebe usw.

Die Übersetzungsselektion 4 ist so ausgeführt, daß nur eine minimale chassis- und motorabhängige Parametrierung ihrer Funktionen notwendig ist, d.h. daß sie nur sehr wenige Daten des Chassis und des Motors des jeweiligen Kraftfahrzeugs enthalten muß. Durch diese Aufteilung der Funktionen zwischen der Motorsteuerung und der Übersetzungsselektion wird der Aufwand für die Verkabelung zwischen der Motorsteuerung, der Übersetzungsselektion sowie den Sensoren und Aktoren - die hier nicht dargestellt sind, da sie allgemein bekannt sind und durch die Erfindung nicht verändert werden - sehr verringert.

Die Übersetzungsselektion 4 ist direkt an dem Gehäuse des Getriebes 3 befestigt oder in diesem Gehäuse untergebracht. Sie wird von dem Hersteller zusammen mit dem Getriebe als eine Einheit geliefert.

Zwischen der Motorsteuerung (MS) 2 und der Übersetzungsselektion (SRCU) 4 werden über den Kommunikationskanal Zustandsgrößen Z und Steuergrößen S ausgetauscht. Ein Beispiel für die auszutauschenden Daten ist in der nachfolgenden Tabelle dargestellt. In ihr bedeutet WK die Wandlerüberbrückungskupplung des im Ausführungsbeispiel verwendeten Getriebes.

| **MS an SRCU** | | **SRCU an MS** |
|---|---|---|
| M_{mot,ist} (Motor-Istmoment) | Z | |
| Üₛₒₗₗ (Soll-Übersetzung) | S | Ü_{soll,o.k.} (Akzeptanz Soll-Übersetzung) |
| | | Üᵢₛₜ (Ist-Übersetzung) |
| WK-Schlupfₛₒₗₗ (WK-Sollschlupf) | S | WK-Schlupfᵢₛₜ (WK-Istschlupf) |
| | | Fehlerstatus der SRCU |
| | | Fehlfunktion der SRCU |
| | | Funktionseinschränkung der SRCU |
| M_{red,ist} (Ist-Momentreduktion) | Z | M_{red,soll} (Soll-Momentreduktion) |
| | | Getriebetemperatur |
| | | Wandlerverstärkung |
| | | Wählhebelposition |

Zusätzlich zu einem derartigen Datenaustausch können auch Parameter, die zum Steuern des Übersetzungswechselprozesses erforderlich sind, zwischen der Motorsteuerung 2 und der Übersetzungsselektion 4 über den Kommunikationskanal 6 ausgetauscht werden. Diese Parameter werden zweckmäßigerweise als physikalische Einheiten übertragen. Ein Beispiel für zu übertragende Parameter ist in einer Tabelle auf Seite 7 dargestellt.

Als Schaltungsarten werden hier die von dem jeweiligen Getriebe abhängigen zulässigen Übersetzungswechsel bezeichnet. So ist zum Beispiel eine Rückschaltung von dem fünften in den ersten oder zweiten, teilweise auch in den dritten, Gang bei vielen Getrieben nicht zugelassen.

Hieraus ergeben sich folgende Vorteile: von der Übersetzungsselektion 4 wird nur ein Minimum an motor- und chassisspezifischen Daten benötigt. Sie ist vollständig unabhängig von Daten des Motors und des Chassis. In der Motorsteuerung 2 wird nur ein Minimum an getriebespezifischen Daten benötigt. Daraus folgt, daß die Übersetzungsselektion bei der Herstellung nicht an unterschiedliche Motor- und Chassisvarianten

| **MS an SRCU** | **SRCU an MS** |
|---|---|
| Massenträgheitsmoment | Ganganzahl (bei Stufengetriebe) |
| Wagenmasse | Übersetzungsverhältnisse (bei Stufengetriebe) |
| Radgröße | Schaltungsarten (bei Stufengetriebe) |
| | minimale Übersetzung (bei stufenlosem Getriebe) |
| | minimale Übersetzung (bei stufenlosem Getriebe) |
| | nominelle Änderungsgeschwindigkeit der Übersetzung (bei stufenlosem Getriebe) |

angepaßt werden muß. Der in der Übersetzungsselektion enthaltene Mikroprozessor oder Rechner - hier nicht dargestellt, da allgemein bekannt - sorgt dafür, daß eine Anpassung anhand von übertragenen Motor- und Chassis-Parametern durchgeführt wird. Eine andere Möglichkeit ist es, Datensätze für die verschiedenen Fahrzeugvarianten in der Übersetzungsselektion 4 zu speichern und jeweils den Datensatz einer dieser Varianten durch ein Codewort zu aktivieren, das über den Kommunikationskanal 6 an die Übersetzungsselektion 4 übertragen wird.

Neben der Übermittlung von physikalischen Parametern, Zustands- und Steuergrößen können auch Identifikationsinformationen zwischen der Motorsteuerung und der Übersetzungsselektion ausgetauscht werden. Damit wird folgendes erreicht.

Werden z.B. im Rahmen von Reparaturen Komponenten ausgetauscht, so ist vorgesehen, daß die Komponenten über den Kommunikationskanal 6 Identifikationsdaten austauschen, die variantenspezifisch sind, d.h. den Kraftfahrzeugtyp identifizieren für den die jeweilige Komponente geeignet ist. Damit sind die anderen Komponenten oder Steuergeräte in der Lage festzustellen, ob sie miteinander funktionsfähig sind. Auf diese Art wird erkannt, ob z.B. versehentlich ein für das Kraftfahrzeug ungeeignetes Getriebe eingebaut worden ist.

Durch diesen Austausch von steuergerätespezifischen Identifikationsdaten läßt sich außerdem ein nicht autorisierter Austausch von Komponenten oder Geräten unterbinden. Dadurch kann z.B. die Reparatur durch nicht autorisierte Werkstätten und insbesondere der Einbau von gestohlenen Geräten in ein Kraftfahrzeug oder von Austauschkomponenten in ein gestohlenes Kraftfahrzeug wirksam unterbunden werden. Damit wird auch ein verbesserter Diebstahlschutz erreicht.

## Patentansprüche

1. Steuerung für ein Kraftfahrzeug mit einem automatischen Getriebe (3), die eine Getriebesteuerung und eine Motorsteuerung (2) einschließt, welche durch einen Kommunikationskanal (6) miteinander verbunden sind, über den eine Verringerung des Motordrehmoments beim Ändern der Getriebeübersetzung bewirkende Daten von der Getriebesteuerung an die Motorsteuerung (2) übermittelt werden,
**dadurch gekennzeichnet,**
- daß sie für ein Kraftfahrzeug mit einem stufenlosen automatischen Getriebe ist,
- daß Funktionseinheiten der Getriebesteuerung, die von Daten des Motors (1) und des Chassis des Kraftfahrzeugs abhängig sind, in die Motorsteuerung (2) integriert sind,
- daß Funktionseinheiten, die von Daten des Getriebes (3) abhängig sind, in einer rechnergesteuerten Übersetzungswechseleinrichtung (4) des Getriebes integriert sind, und
- daß zwischen der Motorsteuerung (2) und der Übersetzungswechseleinrichtung (4) der Übersetzungswahl dienende Daten und Konfigurationsparameter ausgetauscht werden.

2. Steuerung nach Anspruch 1, dadurch gekennzeichnet, daß in der Motorsteuerung (2) eine Übersetzungselektions-Steuerung (22) enthalten ist.

3. Steuerung nach Anspruch 1, dadurch gekennzeichnet, daß in der Motorsteuerung (2) Schaltungseinrichtungen (24) enthalten sind, durch die das Fahrverhalten des Fahrers klassifiziert und durch die die von dem Kraftfahrzeug befahrene Strecke bewertet und eine dynamische Übersetzungskorrektur durchgeführt wird.

4. Steuerung nach Anspruch 1, dadurch gekennzeichnet, daß von der Motorsteuerung (2) Daten über das Motor-Istmoment, die Soll-Getriebeübersetzung, den Sollschlupf der Wandlerüberbrückungskupplung und die Reduktion des Motor-Istmoments an die Übersetzungswechseleinrichtung (4) übermittelt werden.

5. Steuerung nach Anspruch 1, dadurch gekennzeichnet, daß von der Übersetzungswechseleinrichtung (4) Daten über die Annahme der Soll-Getriebeübersetzung, die Ist-Getriebeübersetzung, den Ist-Schlupf einer Wandlerüberbrückungskupplung und die Soll-Momentenreduktion an die Motorsteuerung (2) übermittelt werden.

6. Steuerung nach Anspruch 1, dadurch gekennzeichnet, daß von der Übersetzungswechseleinrichtung (4) Daten über Fehler und Funktionseinschränkungen der Übersetzungswechseleinrichtung, über die Getriebetemperatur, über die Wandlerverstärkung und über die Wählhbelposition an die Motorsteuerung übermittelt werden.

7. Steuerung nach Anspruch 1, dadurch gekennzeichnet, daß beim Einschalten der Zündung von der Motorsteuerung (2) folgende Parameter des Kraftfahrzeugs über den Kommunikationskanal (6) an die Übersetzungswechseleinrichtung (4) übermittelt werden: reduziertes Massenträgheitsmoment am Getriebeabtrieb, Masse des Kraftfahrzeugs und Radgröße.

8. Steuerung nach Anspruch 1, dadurch gekennzeichnet, daß beim Einschalten der Zündung von der Übersetzungswechseleinrichtung (4) folgende Parameter des Getriebes über den Kommunikationskanal (6) an die Motorsteuerung (2) übermittelt werden: eine minimale Übersetzung, eine maximale Übersetzung und eine nominelle Änderungsgeschwindigkeit der Übersetzung.

9. Steuerung nach Anspruch 2, dadurch gekennzeichnet, daß die Übersetzungselektions-Steuerung (22) eine Fuzzy-Logik-Steuerung enthält.

## Claims

1. Control unit for a motor vehicle having an automatic gearbox (3) and including a gearbox control unit and an engine control unit (2) which are connected to one another by means of a communication channel (6) via which data, which bring about a reduction in the engine torque when the gearbox ratio of the gearbox is modified, are transferred from the gearbox control unit to the engine control unit (2), characterized
- in that it is for a motor vehicle having an infinitely variable automatic gearbox,
- in that functional units of the gearbox control unit which are dependent on data from the engine (1) and from the chassis of the motor vehicle are integrated in the engine control unit (2),
- in that functional units which are dependent on data from the gearbox (3) are integrated in a computer-controlled gearbox ratio changing device (4) of the gearbox, and
- in that data and configuration parameters which are used for the selection of the gearbox ratio are exchanged between the engine control unit (2) and the gearbox ratio changing device (4).

2. Control unit according to Claim 1, characterized in that a gearbox ratio selection control unit (22) is contained in the engine control unit (2).

3. Control unit according to Claim 1, characterized in that circuit devices (24) are contained in the engine control unit (2), by means of which circuit devices (24) the handling characteristics of the driver are classified and the route on which the motor vehicle is travelling is evaluated and a dynamic gearbox ratio correction is executed.

4. Control unit according to Claim 1, characterized in that data relating to the actual engine torque, the desired gearbox ratio of the gearbox, the desired slip of the converter lockup clutch and the reduction of the actual engine torque are transferred from the engine control unit (2) to the gearbox ratio changing device (4).

5. Control unit according to Claim 1, characterized in that data relating to the acceptance of the desired gearbox ratio of the gearbox, the actual gearbox ratio of the gearbox, the actual slip of a converter lockup clutch and the desired torque reduction are transferred from the gearbox ratio changing device (4) to the engine control unit (2).

6. Control unit according to Claim 1, characterized in that data relating to faults and functional restrictions of the gearbox ratio changing device, to the gearbox temperature, to the converter amplification and to the position of the gear-shift lever are transferred from the gearbox ratio changing device (4) to the engine control unit.

7. Control unit according to Claim 1, characterized in that when the ignition is switched on, the following parameters of the motor vehicle are transferred from the engine control unit (2) to the gearbox ratio changing device (4) via the communication channel (6): reduced moment of mass inertia at the output of the gearbox, mass of the motor vehicle and wheel size.

8. Control unit according to Claim 1, characterized in that when the ignition is switched on, the following gearbox parameters are transferred from the gearbox ratio changing device (4) to the engine control unit (2) via the communication channel (6): a minimum gearbox ratio, a maximum gearbox ratio and a nominal rate of change of the gearbox ratio.

9. Control unit according to Claim 2, characterized in that the gearbox ratio selection control unit (22) contains a fuzzy logic control unit.

## Revendications

1. Commande pour un véhicule automobile à boîte de vitesses automatique (3), qui comprend une commande de boîte de vitesses et une commande de moteur (2) reliées entre elles par un canal de communication (6) par lequel des données, produisant une réduction du couple de rotation du moteur quand on modifie le rapport de la boîte de vitesses, sont transmises par la commande de boîte de vitesses à la commande de moteur (2),
caractérisée
- en ce qu'elle est destinée à un véhicule automobile comportant une boîte de vitesses automatique continue,
- en ce que des unités de fonctionnement de la commande de boîte de vitesses, dépendant de données du moteur (1) et du châssis du véhicule automobile, sont intégrées dans la commande de moteur (2),
- en ce que des unités de fonctionnement, dépendant de données de la boîte de vitesses (3), sont intégrées dans un dispositif (4) de changement de rapport de la boîte de vitesses, commandé par ordinateur,
- et en ce qu'entre la commande de moteur (2) et le dispositif (4) de changement de vitesse, sont échangées des données, servant au choix du rapport de transmission, et des paramètres de configuration.

2. Commande suivant la revendication 1, caractérisée en ce qu'une commande (22) de sélection du rapport de transmission est contenue dans la commande de moteur (2).

3. Commande suivant la revendication 1, caractérisée en ce que, dans la commande de moteur (2), sont contenus des dispositifs de circuits (24) par lesquels est classifié le comportement de conduite du conducteur et par lesquels la section de trajet parcourue par le véhicule automobile est évaluée et une correction dynamique de rapport de transmission est exécutée.

4. Commande suivant la revendication 1, caractérisée en ce que des données sur la valeur réelle du couple du moteur, sur la valeur de consigne du rapport de transmission de la boîte de vitesses, sur la valeur de consigne du glissement de l'embrayage de prise directe du convertisseur et sur la réduction de la valeur réelle du couple du moteur, sont transmises par la commande de moteur (2) au dispositif (4) de changement de vitesse.

5. Commande suivant la revendication 1, caractérisée en ce que des données sur l'adoption de la valeur de consigne du rapport de transmission de la boîte de vitesses, sur la valeur réelle du rapport de transmission de la boîte de vitesses, sur la valeur réelle du glissement d'un embrayage de prise directe du convertisseur et sur la valeur de consigne de la réduction du couple sont transmises par le dispositif (4) de changement de vitesse à la commande de moteur (2).

6. Commande suivant la revendication 1, caractérisée en ce que des données sur des défauts et des limitations de fonctionnement du dispositif de changement de vitesse, sur la température de la boîte de vitesses, sur le renforcement du convertisseur et sur la position du levier de sélecteur sont transmises par le dispositif (4) de changement de vitesse à la commande de moteur.

7. Commande suivant la revendication 1, caractérisée en ce que, lors de l'enclenchement de l'allumage, les paramètres suivants du véhicule automobile sont transmis par la commande de moteur (2) au dispositif (4) de changement de vitesse, en passant par le canal (6) de communication: couple réduit d'inertie de masse à la sortie de la boîte de vitesses, masse du véhicule automobile, et dimension des roues.

8. Commande suivant la revendication 1, caractérisée en ce que, lors de l'enclenchement de l'allumage, les paramètres suivants de la boîte de vitesses sont transmis par le dispositif (4) de changement de vitesse à la commande de moteur (2), en passant par le canal (6) de communication: un rapport de transmission minimal, un rapport de transmission maximal, et une vitesse nominale de changement du rapport de transmission.

9. Commande suivant la revendication 2, caractérisée en ce que la commande (22) de sélection du rapport de transmission contient une commande à logique floue.
